# EUROPÄISCHE PATENTANMELDUNG

(11) **EP 1 237 030 A2**
(43) Veröffentlichungstag der Anmeldung: **04.09.2002**
(21) Anmeldenummer: 02100175.5
(22) Anmeldetag: 22.02.2002
(51) Int. Cl.: G02B 21/18

(54) **Einblicktubus für ein optisches Gerät**

(30) Priorität: 23.02.2001 DE 10108989
(71) Anmelder: Leica Microsystems AG, 9435 Heerbrugg (CH)
(72) Erfinder: Déverin, Jacques, Dr., 9443, Widnau (CH); Moser, Benno, 9442, Berneck (CH)
(74) Vertreter: Reichert, Werner F., Dr.

(57) **Zusammenfassung**

Beschrieben wird ein Einblicktubus für ein optisches Gerät und insbesondere für ein Mikroskop, bei dem im Strahlengang (L bzw. R) des Einblicktubus Strahlteiler (1 bzw. 2) vorgesehen sind, die einen Teil des Lichts auf einen Mitbeobachtungstubus und/oder eine Aufnahme- bzw. Aufzeichnungseinheit auslenken bzw. Licht von einer Anzeige- und/oder Bearbeitungseinheit in den Strahlengang (L bzw. R) einspiegeln.

Die Erfindung zeichnet sich dadurch aus, dass in jedem Strahlengang (L bzw. R) des Einblicktubus lediglich ein Strahlteiler (1 bzw. 2) vorgesehen ist, der um die optische Achse des jeweiligen Strahlengangs (L bzw. R) drehbar ist und immer in Wirkstellung im Strahlengang verbleibt, und dass der jeweilige Strahlteiler (1 bzw. 2) je nach seiner Drehstellung den ausgespiegelten Teil des Lichts (R• I) in den entsprechenden Strahlengang des Mitbeobachtungstubus bzw. der Aufnahme- bzw. Aufzeichnungseinheit auslenkt oder Licht in den Strahlengang (L bzw. R) des Einblicktubus einkoppelt.

## Beschreibung

Die Erfindung bezieht sich auf einen Einblicktubus für ein optisches Gerät und insbesondere für ein Mikroskop gemäß dem Oberbegriff des Patentanspruchs 1.

Gattungsgemäße Einblicktuben sind allgemein bekannt. Nur exemplarisch wird auf die DE 34 32 635 C2, die DE 196 22 357 A1 oder die EP 1 058 141 A2 verwiesen, auf die im übrigen zur Erläuterung aller hier nicht näher beschriebenen Begriffe ausdrücklich Bezug genommen wird.

Bei den aus diesen Druckschriften bekannten gattungsgemäßen Mikroskopen sind im Strahlengang des Einblicktubus Strahlteiler vorgesehen, die einen Teil des Lichts auf einen Mitbeobachtungstubus und/oder eine Aufnahme- bzw. Aufzeichnungseinheit - wie beispielsweise einen Fotoapparat oder eine Videoeinheit - auslenken. Alternativ bzw. zusätzlich können die Strahlteiler auch Licht von einer Anzeige- und/oder Bearbeitungseinheit - wie beispielsweise eines Behandlungs- und/oder Zielstrahllasers - in den Strahlengang einspiegeln. Ergänzend wird hierzu auf die US-PS 4,138,191 verwiesen.

Bei den bekannten gattungsgemäßen Mikroskopen sind deshalb im Strahlengang des Einblicktubus nacheinander mehrere Strahlteiler vorgesehen, von denen jeder einem bestimmten Gerät bzw. einer bestimmten Aufgabe fest zugeordnet ist. Da häufig nicht alle mit diesen "kaskadierten" Strahlteilern ausführbaren Funktionen benötigt werden, führen die nacheinander im Strahlengang vorgesehenen Strahlteiler zu einer in vielen Einsatzfällen unnötigen Lichtschwächung.

Deshalb ist in einer nicht vorveröffentlichten Patentanmeldung vorgeschlagen worden, die Strahlteiler fest mit dem jeweiligen Gerät zu verbinden, so dass sie bei Nichtbenutzung aus dem Strahlengang entnommen werden können. Da es jedoch häufig nicht erforderlich ist, alle Funktionen gleichzeitig zu realisieren, vergrößert die Option, im Strahlengang nacheinander verschiedene Geräte mit jeweils zugeordnetem Strahlteiler an dem Mikroskop anbringen zu können, die Bauhöhe.

Der Erfindung liegt die Aufgabe zu Grunde, einen Einblicktubus für ein optisches Gerät und insbesondere für ein Mikroskop gemäß dem Oberbegriff des Patentanspruchs 1 derart weiterzubilden, dass ohne unnötige Schwächung des durch den Einblicktubus hindurchgehenden Lichts und ohne unnötige Vergrößerung der Bauhöhe zeitlich sequenziell die verschiedenen Funktionen - wie Ausspiegeln des Lichts auf unterschiedliche Einheiten und/oder Einspiegeln des Lichts in den jeweiligen Strahlengang - realisiert werden können.

Eine erfindungsgemäße Lösung dieser Aufgabe ist im Patentanspruch 1 angegeben. Weiterbildungen der Erfindung sind Gegenstand der abhängigen Ansprüche.

Erfindungsgemäß ist - obgleich die unterschiedlichsten Funktionen realisiert werden können - in jedem Strahlengang des Einblicktubus lediglich ein einziger Strahlteiler vorgesehen. Hierdurch ist gewährleistet, dass die Bauhöhe des Gerätes so klein wie möglich ist. Erfindungsgemäß ist der Strahlteiler um die optische Achse des jeweiligen Strahlengangs drehbar. Damit lenkt der Strahlteiler je nach seiner Drehstellung einen Teil des Lichts des jeweiligen Strahlengangs in unterschiedliche Richtungen ab. Ordnet man in diesen unterschiedlichen Richtungen die gewünschten unterschiedliche Einheiten - wie Mitbeobachtungstuben, Aufnahme- bzw. Aufzeichnungseinheiten, Anzeigeeinheiten zur Darstellung von Bildern und/oder Daten und/oder Einheiten zum Einspiegeln von Licht in den Strahlengang des Einblicktubus - an, so können in Abhängigkeit von der jeweiligen Drehstellung die-verschiedenen gewünschten Funktionen realisiert werden. Dabei können nicht nur zwei, sondern auch drei oder mehr Funktionen und entsprechend viele Drehstellungen jedem Strahlteiler zugeordnet werden, wobei der Strahlteiler- im Gegensatz zum Stand der Technik, bei dem Strahlteiler gewechselt und/oder verschoben werden - immer in einer Wirkstellung im Strahlengang verbleibt.

Die Drehung der in die einzelnen Strahlengänge eingesetzten Strahlteiler kann dabei gekoppelt und/oder entkoppelt durchgeführt werden. Bei der gekoppelten Drehung führt die Bestätigung eine Stellelements dazu, dass sich beide Strahlteiler drehen, während bei der entkoppelten Drehung die im linken bzw. rechten Strahlengang eingesetzten Strahlteiler unabhängig voneinander gedreht werden können

Bei einer bevorzugten Weiterbildung der Erfindung weist der Einblicktubus in an sich bekannter Weise einen Binokularstrahlengang auf. In diesem Falle ist es beispielsweise möglich, bei einer Drehstellung der Strahlteiler das Licht aus den beiden Teil-Strahlengängen in einen binokularen Mitbeobachtungstubus auszuspiegeln, und bei einer anderen Drehstellung das Licht aus einem Teil-Strahlengang auf eine Aufnahme- bzw. Aufzeichnungseinheit auszuspiegeln und in den anderen Teil-Strahlengang Licht einzuspiegeln. Das Licht kann beispielsweise das Licht einer Anzeigeeinheit, das Licht einer Beleuchtungs-Lichtquelle oder einer Bearbeitungseinheit sein.

Bei einer weiteren bevorzugten Ausgestaltung der Erfindung weist jeder Strahlteiler zwei Drehstellungen auf; die beiden Drehstellungen können dabei leicht durch Anschläge definiert werden, so dass der jeweilige Strahlteiler in seiner Drehstellung exakt justiert ist.

Als Strahlteiler können selbstverständlich die verschiedensten Strahlteiler-Elemente - wie wellenlängenselektive Teiler, Polarisations-Teiler oder Neutralteiler, wie teildurchlässige Spiegel und insbesondere Strahlteilerwürfel - eingesetzt werden.

Besonders bevorzugt ist die Verwendung des erfindungsgemäßen Einblicktubus in einem Stereo-Mikroskop.

Weiterhin ist es möglich, den erfindungsgemäßen Grundgedanken, die unterschiedlichsten Funktionen mittels lediglich eines einzigen in jeden Strahlengang des Einblicktubus eingesetzten Strahlteilers zu realisieren, der immer in seiner Wirkstellung verbleibt, mit den Grundgedanken zu kombinieren, die in einer am gleichen Tage eingereichten DE-Anmeldung mit dem amtlichen Aktenzeichen 101 08 988.0 beschrieben sind. In dieser genannten Anmeldung ist dargelegt, dass ein Anzeigemodul und ein Aufnahmemodul stationär an einem Grundkörper eines optischen Gerätes - wie eines Mikroskops - angeordnet sind. Die optische Verbindung der Module mit einem oder beiden Strahlengängen erfolgt über optische Schalter, die Lichtwege freigeben bzw. sperren.

Die Erfindung wird nachstehend anhand eines Ausführungsbeispiels unter Bezugnahme auf die Zeichnung näher beschrieben, in der zeigen:
- Fig. 1:: ein Ausführungsbeispiel in einer ersten Stellung der Strahlteilerwürfel;
und
- Fig. 2:: ein Ausführungsbeispiel in einer zweiten Stellung der Strahlteilerwürfel.

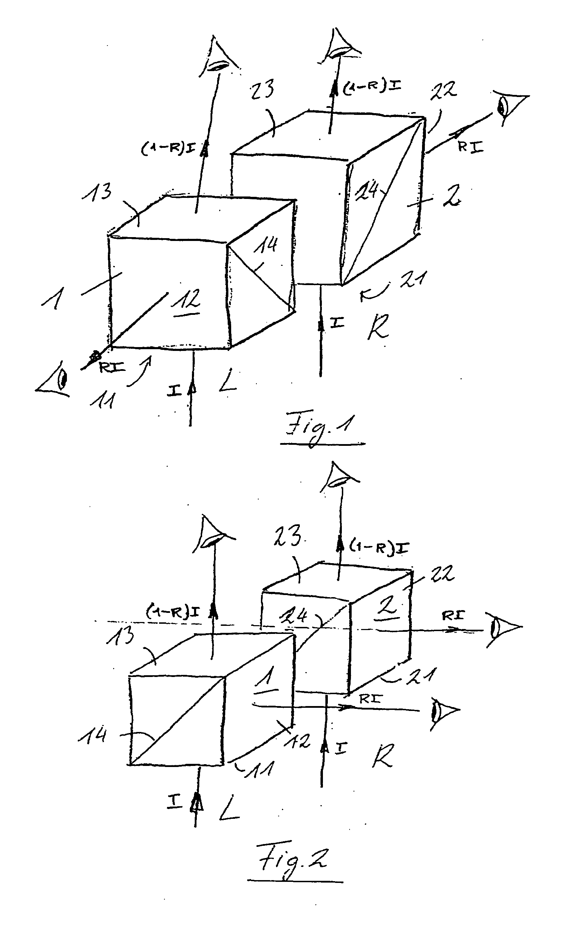

Fig. 1 zeigt ein Ausführungsbeispiel der Erfindung, bei dem ohne Beschränkung der allgemeinen Anwendbarkeit der Erfindung im linken (L) und im rechten (R) Teil-Strahlengang eines nicht näher dargestellten Stereo-Mikroskops jeweils ein Strahlteiler-Würfel 1 bzw. 2 angeordnet ist. Die Strahlteiler-Würfel 1 bzw. 2 befinden sich dabei bevorzugt - aber nicht notwendigerweise - in dem Teil des Strahlenganges, in dem dieser parallel ist. Das von einem nicht dargestellten Mikroskopobjektiv kommende Licht tritt durch die Fläche 11 bzw. 21 in den Strahlteiler-Würfel 1 bzw. 2 ein. An den jeweiligen Teilerflächen 14 bzw. 24 wird ein Bruchteil R•I des Lichts um 90 Grad umgelenkt und tritt aus den Flächen 12 bzw. 22 aus. Der durchgehende Lichtstrahl mit der Intensität (1-R)•I tritt aus den Flächen 13 bzw. 23 aus. Die Beobachtungsmöglichkeiten durch den oder die Beobachter sind schematisch dargestellt.

In der in Fig. 1 dargestellten Drehstellung sind die Strahlteiler-Würfel 1 bzw. 2 so angeordnet, dass die Flächen 12 bzw. 22 entgegengesetzt orientiert sind. In dieser Stellung kann das Licht beispielsweise vom Strahlteiler-Würfel 1 auf eine nicht mit dargestellte Aufnahmeeinheit umgelenkt werden. Der Strahlteiler-Würfel 2 kann beispielsweise zum Einspiegeln von Licht auf einen ebenfalls nicht mit dargestellten Objektträger verwendet werden. Selbstverständlich kann er auch in einem monokularen Mitbeobachtungstubus genutzt werden.

In der in Fig. 2 dargestellten Drehstellung sind die Strahlteiler-Würfel 1 bzw. 2 so angeordnet, dass die Flächen 12 bzw. 22, aus denen das ausgespiegelte Licht austritt, auf der gleichen Seite angeordnet sind. Damit kann das Licht in dieser Drehstellung beispielsweise in einem ebenfalls binokularen bzw. Stereo-Mitbeobachtungstubus ausgespiegelt werden. Dies wird schematisch durch das eingezeichnete Augen-Paar verdeutlicht.

Vorstehend ist die Erfindung anhand eines Ausführungsbeispiels ohne Beschränkung des allgemeinen Erfindungsgedankens beschrieben worden.

### Bezugszeichenliste

- 1, 2: Strahlteiler-Würfel
- 11, 21: Eintrittsfläche der Strahlteiler-Würfel
- 12, 22: Austrittsfläche des umgelenkten Lichtstrahls
- 13, 23: Austrittsfläche des durchgehenden Lichtstrahls
- 14, 24: Teilerfläche
- I: auftreffendes Licht
- R•I: ausgespiegeltes Licht
- (1-R)•I: durchgehendes Licht
- L: linker Strahlengang
- R: rechter Strahlengang

## Patentansprüche

1. Einblicktubus für ein optisches Gerät - insbesondere ein Mikroskop -, bei dem im Strahlengang des Einblicktubus Strahlteiler vorgesehen sind, die einen Teil des Lichts auf einen Mitbeobachtungstubus und/oder eine Aufnahme- bzw. Aufzeichnungseinheit auslenken bzw. Licht von einer Anzeige- und/oder Bearbeitungseinheit in den Strahlengang einspiegeln, **dadurch gekennzeichnet, dass** in jedem Strahlengang (L bzw. R) des Einblicktubus lediglich ein Strahlteiler (1, 2) vorgesehen ist, der um die optische Achse des jeweiligen Strahlengangs (L bzw. R) drehbar ist und immer in Wirkstellung im Strahlengang (L bzw. R) verbleibt, und dass der jeweilige Strahlteiler (1 bzw. 2) je nach seiner Drehstellung den ausgespiegelten Teil des Lichts (R·I) in den entsprechenden Strahlengang des Mitbeobachtungstubus bzw. der Aufnahme- bzw. Aufzeichnungseinheit auslenkt oder Licht in den Strahlengang (L bzw. R) des Einblicktubus einkoppelt.

2. Einblicktubus nach Anspruch 1, **dadurch gekennzeichnet, dass** der Einblicktubus einen Binokularstrahlengang aufweist.

3. Einblicktubus nach Anspruch 1 oder 2, **dadurch gekennzeichnet, dass** jeder Strahlteiler (1 bzw. 2) zwei Drehstellungen aufweist.

4. Einblicktubus nach einem der Ansprüche 1 bis 3, **dadurch gekennzeichnet, dass** die Strahlteiler Strahlteilerwürfel (1 bzw. 2) sind.

5. Verwendung eines Einblicktubus nach einem der Ansprüche 1 bis 4 in einem Stereo-Mikroskop.
